# EUROPÄISCHE PATENTSCHRIFT

(11) **EP 3 544 152 B1**
(45) Veröffentlichungstag und Bekanntmachung des Hinweises auf die Patenterteilung: **28.10.2020**
(21) Anmeldenummer: 19157336.9
(22) Anmeldetag: 15.02.2019
(51) Int. Cl.: H02K 1/18, H02K 5/167, H02K 7/18, H02K 17/42

(54) **WASSERKRAFTGENERATOR MIT FLEXIBLER STATORBEFESTIGUNG**
WATER POWER GENERATOR WITH FLEXIBLE STATOR FIXING
GÉNÉRATEUR HYDRAULIQUE À FIXATION FLEXIBLE DE STATOR

(30) Priorität: 21.03.2018 AT 502382018
(43) Veröffentlichungstag der Anmeldung: 25.09.2019
(73) Patentinhaber: Andritz Hydro GmbH, 1120 Wien (AT)
(72) Erfinder: NEUMAYER, Fritz, 8010 Graz (AT); HIMMELREICH, Mario, 8160 Weiz (AT); THALER, Georg, 8043 Graz (AT)
(74) Vertreter: Tschinder, Thomas

(56) Entgegenhaltungen:
- CN-A- 101 267 141
- CN-Y- 2 927 473
- DE-A1- 19 960 278
- US-A- 3 988 622

## Beschreibung

Den Gegenstand dieser Erfindung bildet ein Wasserkraftgenerator mit einem Rotor mit vertikaler Rotationsachse und mit einem den Rotor umgebenden Stator. Der Stator weist einen die Statorwicklung beinhaltenden Statorkern und ein Statorgehäuse auf, welches unter anderem aus Mantel, Spanten und Leisten besteht. Der Statorkern ist mit Hilfe von Spanten mit dem Statormantel verbunden, wobei der Statormantel auf ein Fundament aufgesetzt ist.

Bei Wasserkraftgeneratoren mit vertikaler Rotationsachse muss die Verbindung des Stators mit dem Fundament mehrere Kriterien erfüllen. So muss die Gewichtskraft des Stators und in bestimmmten Fällen auch zusätzlich die Gewichtskraft der rotierenden Teile über diese Verbindung in das Fundament eingeleitet werden können. Es müssen aber auch zusätzliche statische und dynamische Kräfte bzw. Drehmomente durch die Verbindung aufgenommen werden können. Zusätzlich muss die Verbindung auch eine radiale Ausdehnung des Stators zulassen, da sich der Stator im Betrieb auf Grund seiner Erwärmung radial ausdehnt. Wird ein derartiges Wachstum nicht zugelassen, kann es unter Umständen zu unerwünschten Verformungen des Statorblechpaketes sowie zu unzulässig hohen Fundamentkräften kommen.

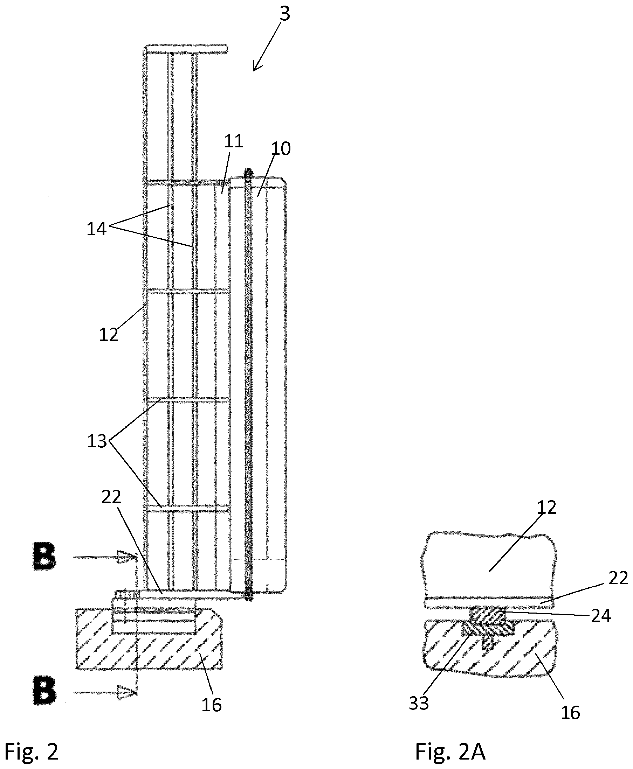

Figur 2 zeigt eine schematische Ausführung des Stators 3 nach dem Stand der Technik. Hier sind die Leisten 11 des Statorgehäuses über ringförmige Spanten 13, 22 mit dem Statormantel 12 verbunden. Die ringförmigen Spanten 13, 22 sorgen einerseits für die Verbindung des Statorkerns 10 mit dem Statormantel 12, andererseits gewährleisten sie aber die exakte Zylinderform des Statorkerns 10. Auch die unterste ringförmige Spante 22 ist direkt mit dem Statormantel 12 verbunden. Die unterste Spante 22 ist über mehrere über den Umfang verteilte Gleitstücke 24 mit dem Fundament 16 verbunden (siehe Figur 2A). Die Gleitstücke 24 können auf Sohlplatten 33 in radialer Richtung gleiten und somit ein radiales Wachstum des Stators 3 zulassen. Im Falle von unterschiedlichen Reibkräften an den Gleitstücken 24 kann es zu ungleichmäßigen, unerwünschten radialen Verformungen des Stators 3 kommen.

Die CN101267141 beschreibt einen Wasserkraftgenerator mit einem Rotor mit vertikaler Rotationsachse nach der Präambel des unabhängigen Anspruchs 1.

Die US 3,988,622 offenbart ein Statorgehäuse, bei dem das Blechpaket zwischen zwei Druckplatten eingespannt ist und wobei die unter Druckplatte gleitend am Fundament aufliegt. Der Erfindung liegt daher die Aufgabe zugrunde, einen Wasserkraftgenerator bereitzustellen, bei dem der Stator einerseits so mit dem Fundament verbunden ist, dass ein radiales Wachstum des Stators zugelassen wird und dabei ungleichmäßige radiale Verformungen des Stators unterbunden werden.
Gelöst wird diese Aufgabe durch einen Wasserkraftgenerator gemäß Patentanspruch 1. Erfindungsgemäß ist der Statormantel nicht über eine Gleitverbindung, sondern fest mit dem Fundament verbunden. Im Bereich des unteren Endes des Statorkerns ist ein Versteifungsring zur Stabilisierung des Statorkerns vorgesehen. Dieser Versteifungsring ist jedoch nicht direkt mit dem Statormantel verbunden. Während des Betriebes dehnt sich der Statorkern radial aus. Da der Versteifungsring nicht direkt mit dem Statormantel oder dem Fundament verbunden ist, kann er sich ebenso wie der Statorkern ausdehnen. Erfindungsgemäß ist der Versteifungsring über Aussteifungsrippen oder über Rohre mit der untersten Spante verbunden. Der Statormantel ist im unteren Bereich flexibel ausgeführt, sodass er die radiale Ausdehnung des Statorkerns im Bereich der Spanten mitmacht. Am unteren Ende kann der Statormantel mit einem Mantelflansch enden und/oder Statorfüße aufweisen. Der Statormantel ist am unteren Ende fest mit dem Fundament verbunden. Trotz Nachgiebigkeit des Statormantels ist der Statorkern stets zentriert.

Es ist günstig, wenn der Statorkern über Leisten, vorzugweise Schwalbenschwanzleisten, mit den Spanten und mit dem Versteifungsring verbunden ist. Die Statorbleche sind dann in die Leisten eingehängt.

Vorzugsweise liegt der Statorkern auf einer ringförmigen oder segmentierten Druckplatte auf und diese Druckplatte ist mit dem Versteifungsring verbunden.
Beispielsweise kann die Druckplatte auf dem Versteifungsring aufliegen. Wenn die Druckplatte einen größeren Radius als der Statorkern aufweist und somit über diesen hinausragt, kann sie auch unterhalb des Versteifungsrings angeordnet sein.

Die Druckplatte und der Versteifungsring können auch ein einstückiges Bauteil darstellen.

Es ist denkbar, dass das Traglager für den Wellenstrang oberhalb des Stators angeordnet ist und dass die Gewichtskraft der rotierenden Massen und eventuell auftretende hydraulische Axialkräfte über das Traglager und den Statormantel in das Fundament eingeleitet werden.

Vorzugsweise sind die Spanten über vertikale Distanzstücke, etwa Rohre oder Rippen zur Aufnahme von vertikalen Axialkräften miteinander verbunden, wobei die unteren Enden der Distanzstücke über flexible Stützen mit dem Fundament verbunden sind.

Das Statorgehäuse, gegebenenfalls samt Statorkern, kann auch aus mehreren Umfangssegmenten aufgebaut sein, sodass ein Transport in Teilstücken ermöglicht wird.

Im Folgenden wird ein Ausführungsbeispiel der Erfindung anhand von Zeichnungen beschrieben. Es zeigen:
Fig. 1 einen schematischen Längsschnitt entlang der Rotorachse durch den erfindungsgemäßen Wasserkraftgenerator;
Fig. 2 einen Schnitt durch einen Stator einer herkömmlichen Maschine (Stand der Technik);
Fig. 2A eine Schnittansicht durch Figur 2 entlang der Linie B-B (Stand der Technik);
Fig. 3 eine Ausführungsform eines erfindungsgemäßen Stators;
Fig. 4 eine weitere Ausführungsform des erfindungsgemäßen Stators;
Fig. 5 den erfindungsgemäßen Stator aus Figur 4 im betriebswarmen Zustand;
Fig. 6 und 7 jeweils eine perspektivische Ansicht des erfindungsgemäßen Stators;
Fig. 8 eine weitere Ausführungsform des erfindungsgemäßen Stators;
Gleiche Bezugszeichen in den einzelnen Figuren bezeichnen jeweils gleiche Anlagenteile.

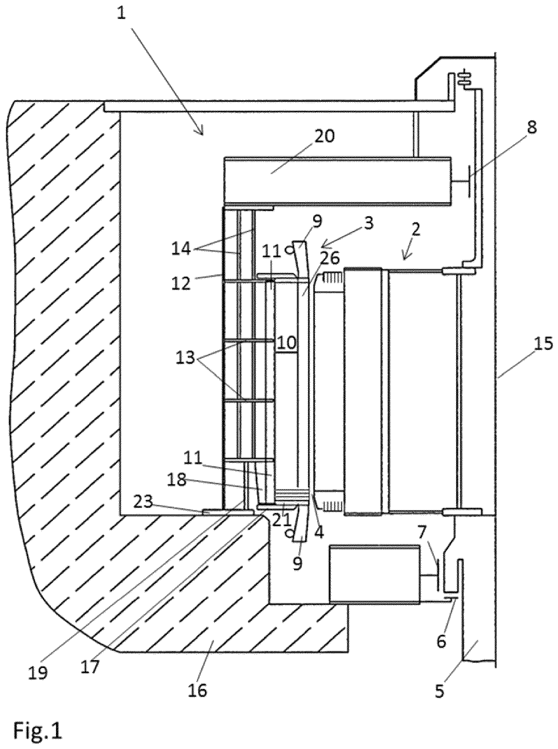

Figur 1 zeigt einen Schnitt durch einen erfindungsgemäßen Generator 1. Hierbei ist ein Rotor 2 innerhalb eines Stators 3 angeordnet. Der Rotor 2 rotiert um die vertikale Rotationsachse 15, die Rotorwelle 5 wird durch das Traglager 6 und die beiden Führungslager 7 und 8 gelagert. Am unteren Ende der Rotorwelle 5 befindet sich die Turbine (nicht dargestellt). Zwischen dem Rotor 2 und dem Stator 3 befindet sich ein Luftspalt 4. In Nuten des Statorkerns 10 ist die Statorwicklung 26 eingelegt. Am oberen und unteren Ende des Statorkerns 10 befindet sich der Wickelkopf 9. Die Leisten 11 des Statorkerns 10 sind über Spanten 13 mit dem Statormantel 12 verbunden. Zwischen den Spanten 13 sind vertikale Distanzstücke 14 zur Aussteifung angeordnet.

Der Statorkern 10 liegt hier mit der Druckplatte 21 auf einem ringförmigen Versteifungsring 17 auf. Dieser Versteifungsring 17 ist im Gegensatz zu den Spanten 13 nicht direkt mit dem Statormantel 12 verbunden. Der Versteifungsring 17 ist mit den Leisten 11 fest verbunden, zusätzlich ist er auch über die Aussteifungsrippen 18 mit der untersten Spante 13 verbunden.
Der Statormantel 12 ist über einen Mantelflansch 23 und/oder Statorfüße 31 fest mit dem Fundament 16 verbunden. Zusätzlich werden über die in radialer Richtung flexiblen Stützen 19 Vertikalkräfte in das Fundament 16 eingeleitet.

Am oberen Ende des Statormantels 12 liegt der Armstern 20 auf, welcher hier das Führungslager 8 für die Rotorwelle 5 trägt. Es ist aber auch möglich, dass zusätzlich zum Führungslager 8 ein Traglager verwendet wird, das dann die Gewichtskraft der rotierenden Massen und die hydraulische Axialkraft aufnimmt. Diese Kräfte werden dann über den Armstern 20 und die Distanzstücke 14 und Stützen 19 in das Fundament 16 eingeleitet.

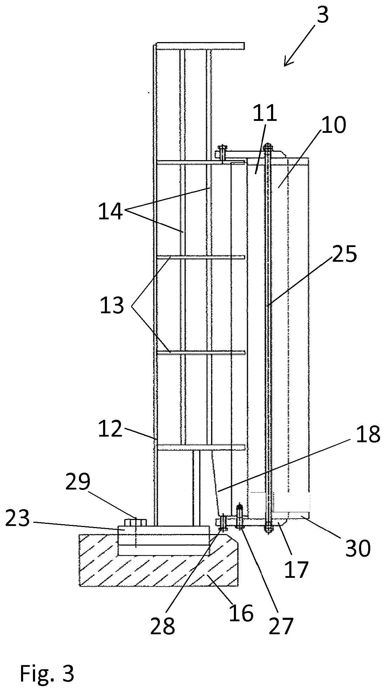

Figur 3 zeigt einen Schnitt durch ein Ausführungsbeispiel des erfindungsgemäßen Stators 3. Das Blechpaket des Statorkerns 10 ist hier zwischen Druckplatten mit Bolzen 25 (Statorpressbolzen) zusammengespannt. Der untere Versteifungsring 17 dient dabei gleichzeitig als Druckplatte. Zwischen dem Statorkern 10 und dem Versteifungsring sind die Druckfinger 30 angeordnet. Auch der Versteifungsring 17 ist mit Hilfe der Bolzen 25 mit dem Statorkern 10 verschraubt. Über die Schrauben 27 ist der Versteifungsring 17 mit den Leisten 11 verbunden.
Durch die Stellschrauben 28 kann der, durch die Gewichtskraft verursachten Verformung des Versteifungsringes 17 entgegengewirkt werden. Man erkennt hier gut, dass der Versteifungsring 17 nicht mit dem Statormantel 12 verbunden ist. Der Statormantel 12 ist über den Mantelflansch 23 mit Hilfe von Schrauben 29 und/oder Bolzen fest mit dem Fundament 16 verbunden.

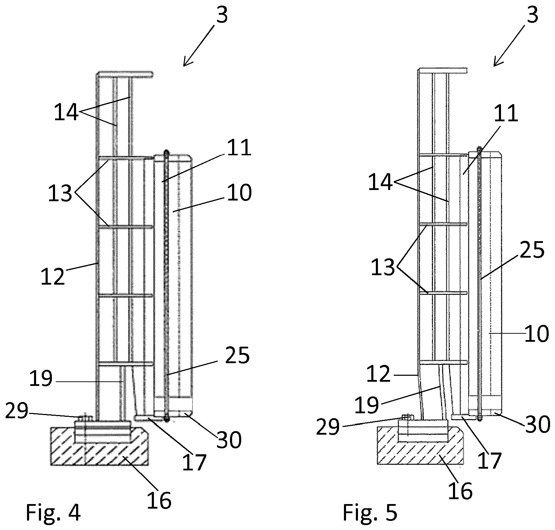

Die Figuren 4 und 5 zeigen ein weiteres Ausführungsbeispiel des Stators 3. Hierbei liegt die Druckplatte 21 auf dem Versteifungsring 17 auf. Figur 4 zeigt den Stator 3 im kalten Zustand und Figur 5 zeigt denselben Stator 3 im betriebswarmen Zustand. In Figur 5 ist die Verformung des unteren Teils des Statormantels 12 dargestellt. Man erkennt, dass im unteren Bereich des Stators 3 der Statormantel 12 und die Stützen 19 verformt wurden. Diese Verformung wird durch das thermisch bedingte radiale Wachstum des Statorkerns 10 hervorgerufen. Man erkennt hier gut, dass sich der Statorkern 10 über seine gesamte Höhe in radialer Richtung ausdehnen kann. Über die Spanten 13 wird die radiale Verschiebung auf den Statormantel 12 übertragen, der sich ebenfalls ausdehnen kann. Da der Statormantel 12 im unteren Bereich flexibel ist, kann er mit dem Fundament 16 über die Schrauben 29 und/oder Bolzen fest verbunden werden. Die radiale Ausdehnung wird durch die elastische Verformung des Statormantels 12 ausgeglichen, wobei allenfalls vorhandene flexible Stützen 19 mitverformt werden. Vertikale Kräfte auf das Statorgehäuse werden vorwiegend durch die vertikalen Distanzstücke 14, die zwischen den Spanten 13 verlaufen, übertragen. Damit diese vertikalen Kräfte nicht vollständig über den Statormantel 12 in das Fundament 16 eingeleitet werden müssen, können zwischen der untersten Spante 13 und dem Fundament 16 Stützen 19 angeordnet sein, die ebenso wie der Statormantel 12 eine flexible Bewegung in radialer Richtung ausführen können. Der Begriff "radial" bezieht sich in dieser Anmeldung immer auf die vertikale Rotationsachse 15.

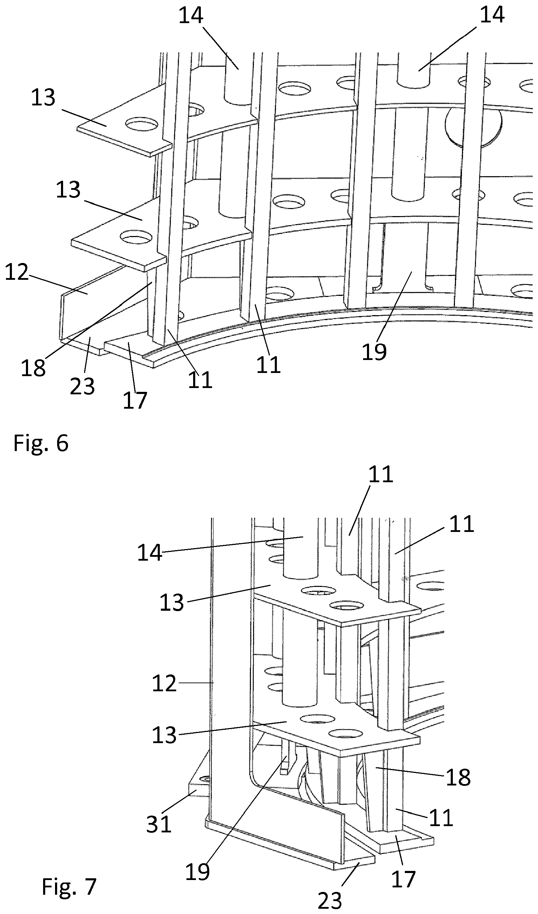

Figur 6 und Figur 7 zeigen zwei perspektivische Ansichten eines Teils des Stators 3 aus Figur 4. Der Statorkern 10 samt Druckplatte 21 und das Fundament 16 sind hier nicht dargestellt. In diesen Darstellungen erkennt man den Versteifungsring 17, der nicht direkt mit dem Statormantel 12 verbunden ist. Der Versteifungsring 17 ist nur mit den Leisten 11 und mit den Aussteifungsrippen 18 verbunden. Der Statormantel 12 ist hier vieleckig ausgeführt. Die Leisten 11 sind über die Spanten 13 mit dem Statormantel 12 verbunden, außerdem sind zwischen den Spanten 13 Distanzstücke 14, in diesem Beispiel als Rohre ausgebildet, angeordnet. Damit nicht die gesamten Axialkräfte über den Gehäusemantel 12 in das Fundament 16 übertragen werden müssen, können unterhalb der untersten Spante 13 Stützen 19 angeordnet sein. Diese Stützen 19 verformen sich ebenso wie der Statormantel 12 in radialer Richtung, wenn sich der Statorkern 10 ausdehnt. Man erkennt hier auch den Mantelflansch 23, der über die Statorfüße 31 mit dem Fundament 16 verbunden ist.

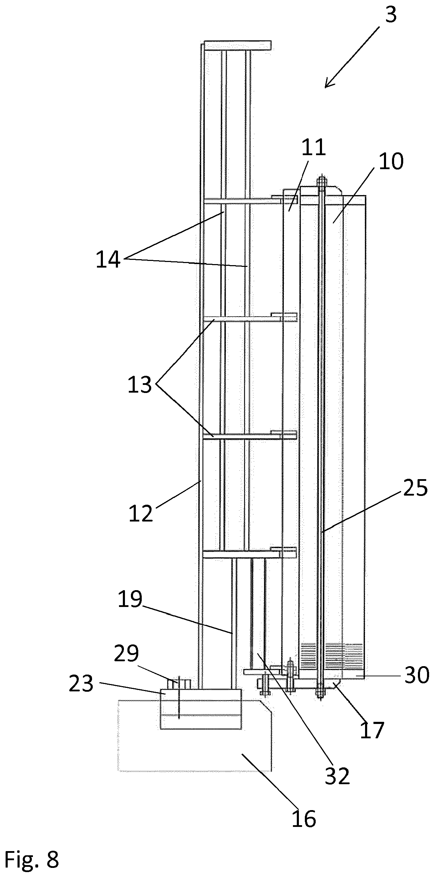

Figur 8. zeigt eine Ausführungsform des erfindungsgemäßen Stators. Hier stellen jedoch Druckplatte 21 und Versteifungsring 17 separate Bauteile dar.
Anstatt der Aussteifungsrippen 18 sind Rohre 32 vorgesehen. Die Leisten 11 sind über Laschen 34 mit den Spanten 13 und dem Versteifungsring 17 verbunden.

## Patentansprüche

1. Wasserkraftgenerator (1) mit einem Rotor (2) mit vertikaler Rotationsachse (15) und mit einem Stator (3), wobei der Rotor (2) innerhalb des Stators (3) angeordnet ist, wobei der Stator (3) einen die Statorwicklung (26) beinhaltenden Statorkern (10) und einen vom Statorkern (10) beabstandeten Statormantel (12) aufweist, wobei der Statorkern (10) mit Hilfe von Spanten (13), die sich vertikal zur Rotationsachse (15) erstrecken, mit dem Statormantel (12) verbunden ist, wobei zwischen den Spanten (13) vertikale Distanzstücke (14) zur Aussteifung angeordnet sind und wobei der Statormantel (12) auf ein Fundament (16) aufgesetzt ist, wobei das untere Ende des Statormantels (12) fest mit dem Fundament (16) verbunden ist und im Bereich des unteren Endes des Statorkerns (10) ein Versteifungsring (17) zur Stabilisierung des Statorkerns (10) vorgesehen ist, wobei der Versteifungsring (17) mit dem Statorkern (10) gekoppelt, jedoch vom Statormantel (12) beabstandet ist, sodass der Versteifungsring (17) nicht direkt mit dem Statormantel (12) verbunden ist, **dadurch gekennzeichnet, dass** der Versteifungsring (17) über Aussteifungsrippen (18) oder über Rohre (32) mit einer untersten Spante (13) verbunden ist.

2. Wasserkraftgenerator (1) nach Anspruch 1, **dadurch gekennzeichnet, dass** der Statorkern (10) über Leisten (11) mit den Spanten (13) und mit dem Versteifungsring (17) verbunden ist.

3. Wasserkraftgenerator (1) nach Anspruch 1 oder 2, **dadurch gekennzeichnet, dass** der Statorkern (10) auf einer ringförmigen oder segmentierten Druckplatte (21) aufliegt und dass die Druckplatte (21) mit dem Versteifungsring (17) verbunden ist.

4. Wasserkraftgenerator (1) nach Anspruch 3, **dadurch gekennzeichnet, dass** die Druckplatte (21) auf dem Versteifungsring (17) aufliegt.

5. Wasserkraftgenerator (1) nach Anspruch 3, **dadurch gekennzeichnet, dass** die Druckplatte (21) unterhalb des Versteifungsringes (17) angeordnet ist und durch Schrauben (27) mit dem Versteifungsring (17) und/oder den Leisten (11) verbunden ist.

6. Wasserkraftgenerator (1) nach Anspruch 3, **dadurch gekennzeichnet, dass** die Druckplatte (21) und der Versteifungsring (17) ein einstückiges Bauteil darstellen.

7. Wasserkraftgenerator (1) nach einem der Ansprüche 1 bis 6, **dadurch gekennzeichnet, dass** ein Traglager oberhalb des Stators (3) angeordnet ist und dass die Gewichtskraft der rotierenden Massen und der hydraulische Axialschub der Turbine über das Traglager und den Statormantel (12) in das Fundament (16) eingeleitet werden.

8. Wasserkraftgenerator (1) nach einem der Ansprüche 1 bis 7, **dadurch gekennzeichnet, dass** die Spanten (13) über vertikale Distanzstücke (14) zur Aufnahme von Axialkräften miteinander verbunden sind und wobei die unteren Enden der Distanzstücke (14) über flexible Stützen (19) mit einem Mantelflansch (23) oder mit Statorfüßen (31) des Statormantels (12) verbunden sind.

9. Wasserkraftgenerator (1) nach einem der Ansprüche 1 bis 8, **dadurch gekennzeichnet, dass** der Statormantel (12) und die Spanten (13) aus mehreren Segmenten aufgebaut sind, sodass ein Transport in Teilstücken ermöglicht wird.

10. Wasserkraftgenerator (1) nach einem der Ansprüche 3 bis 9, **dadurch gekennzeichnet, dass** sich zwischen der Druckplatte (21) und dem Statorkern (10) Druckfinger (30) befinden.

## Claims

1. Hydro generator (1) having a rotor (2) with vertical axis of rotation (15) and with a stator (3), where the rotor (2) is disposed inside the stator (3), where the stator (3) has a stator core (10) containing the stator winding (26) and a stator housing (12) spaced at a distance from the stator core (10), where the stator core (10) is connected to the stator housing (12) with the aid of ribs (13) extending in vertical direction to the axis of rotation (15), where vertical spacers (14) to provide rigidity are disposed between the ribs (13), and where the stator housing (12) is placed on a foundation (16), where the lower end of the stator housing (12) is firmly connected to the foundation (16) and a stiffening ring (17) is provided in the area of the lower end of the stator core (10) to stabilise the stator core (10), where the stiffening ring (17) is coupled with the stator core (10) but spaced at a distance from the stator housing (12) such that the stiffening ring (17) is not directly connected to the stator housing (12), **characterised in that** the stiffening ring (17) is connected to a bottommost rib (13) via stiffeners (18) or ducts (32).

2. Hydro generator (1) according to claim 1, **characterised in that** the stator core (10) is connected to the ribs (13) and the stiffening ring (17) via ledges (11).

3. Hydro generator (1) according to claim 1 or 2, **characterised in that** the stator core (10) rests on an annular or segmented pressure plate (21) and the pressure plate (21) is connected to the stiffening ring (17).

4. Hydro generator (1) according to claim 3, **characterised in that** the pressure plate (21) rests on the stiffening ring (17).

5. Hydro generator according to claim 3, **characterised in that** the pressure plate (21) is disposed underneath the stiffening ring (17) and connected to the stiffening ring (17) and/or ledges (11) by means of bolts/screws.

6. Hydro generator (1) according to Claim 3, **characterised in that** the pressure plate (21) and the stiffening ring (17) form a single component.

7. Hydro generator according to one of claims 1 to 6, **characterised in that** a support bearing is disposed above the stator (3) and the weight of the rotating masses and the hydraulic axial thrust of the turbine are transmitted to the foundation (16) via the support bearing and the stator housing (12).

8. Hydro generator (1) according to one of claims 1 to 7, **characterised in that** the ribs (13) are connected to one another via vertical spacers (14) in order to absorb the axial thrust and where the lower ends of the spacers (14) are connected to a housing flange (23) or to stator legs (31) via flexible supports (19).

9. Hydro generator (1) according to one of claims 1 to 8, **characterised in that** the stator housing (12) and the ribs (13) are made up of several segments so that they can be transported in sections.

10. Hydro generator (1) according to one of claims 3 to 9, **characterised in that** outside space blocks (30) are located between the pressure plate (21) and the stator core (10).

## Revendications

1. Générateur hydraulique (1) comprenant un rotor (2) ayant un axe de rotation vertical (15) et un stator (3), le rotor (2) étant disposé à l'intérieur du stator (3), le stator (3) ayant un noyau de stator (10) contenant l'enroulement de stator (26) et une enveloppe de stator (12) éloignée du noyau de stator (10), le noyau de stator (10) étant relié à l'enveloppe de stator (12) à l'aide de nervures (13) qui s'étendent à la verticale de l'axe de rotation (15), des entretoises verticales (14) servant à apporter de la rigidité étant disposées entre les nervures (13), et l'enveloppe de stator (12) étant posée sur une fondation (16), la partie inférieure de l'enveloppe du stator (12) étant reliée solidement à la fondation (16) et une bague de raidissement (17) étant disposée dans la zone de l'extrémité inférieure du noyau de stator (10) pour stabiliser le noyau de stator (10), la bague de raidissement (17) étant couplée au noyau de stator (10) mais espacée à une certaine distance de l'enveloppe de stator (12) de sorte que la bague de raidissement (17) ne soit pas directement reliée à l'enveloppe de stator (12), **caractérisé en ce que** la bague de raidissement (17) est reliée à une nervure inférieure (13) par des raidisseurs (18) ou des tubes (32).

2. Générateur hydraulique (1) selon la revendication 1, **caractérisé en ce que** le noyau de stator (10) est relié aux nervures (13) et à la bague de raidissement (17) par des traverses (11).

3. Générateur hydraulique (1) selon la revendication 1 ou la revendication 2, **caractérisé en ce que** le noyau de stator (10) repose sur une plaque de pression segmentée ou annulaire (21) et **en ce que** la plaque de pression (21) est reliée à la bague de raidissement (17).

4. Générateur hydraulique (1) selon la revendication 3, **caractérisé en ce que** la plaque de pression (21) repose sur la bague de raidissement (17).

5. Générateur hydraulique (1) selon la revendication 3, **caractérisé en ce que** la plaque de pression (21) est disposée sous la bague de raidissement (17) et reliée à la bague de raidissement (17) et/ou aux traverses (11) au moyen de vis (27).

6. Générateur hydraulique (1) selon la revendication 3, **caractérisé en ce que** la plaque de pression (21) et la bague de raidissement (17) forme un élément d'un seul tenant.

7. Générateur hydraulique (1) selon l'une des revendications 1 à 6, **caractérisé en ce qu'**un support est disposé au-dessus du stator (3) et le poids des masses en rotation et la poussée axiale hydraulique de la turbine sont transmis à la fondation (16) par l'intermédiaire du support et de l'enveloppe de stator (12).

8. Générateur hydraulique (1) selon l'une quelconque des revendications 1 à 7, **caractérisé en ce que** les nervures (13) sont reliées l'une à l'autre par des espaceurs verticaux (14) pour absorber la poussée axiale et les extrémités inférieures des espaceurs (14) étant reliées à une bride d'enveloppe (23) ou aux pieds de stator (31) de l'enveloppe de stator (12) par des supports souples (19).

9. Générateur hydraulique (1) selon l'une des revendications 1 à 8, **caractérisé en ce que** l'enveloppe de stator (12) et les nervures (13) sont constituées de plusieurs segments, permettant ainsi un transport par sections.

10. Générateur hydraulique (1) selon l'une des revendications 3 à 9, **caractérisé en ce que** des griffes de serrage (30) se situent entre la plaque de pression (21) et le noyau de stator (10).
